(19) Europäisches Patentamt
European Patent Office
Office européen des brevets

(11) Numéro de publication: **0 286 762 B1**

(12) # FASCICULE DE BREVET EUROPEEN

(45) Date de publication de fascicule du brevet: **07.08.91**

(51) Int. Cl.5: **B01D 59/34**

(21) Numéro de dépôt: **87400904.6**

(22) Date de dépôt: **17.04.87**

(54) **Système permettant l'obtention d'une réaction sélective dans des processus photochimiques à partir de faisceaux lasers, comprenant des moyens de répartition de ces faisceaux.**

(43) Date de publication de la demande:
**19.10.88 Bulletin 88/42**

(45) Mention de la délivrance du brevet:
**07.08.91 Bulletin 91/32**

(84) Etats contractants désignés:
**DE GB IT**

(56) Documents cités:
**FR-A- 2 253 296**
**FR-A- 2 341 873**
**GB-A- 2 018 011**
**US-A- 4 189 646**

(73) Titulaire: **COMMISSARIAT A L'ENERGIE ATOMIQUE Etablissement de Caractère Scientifique Technique et Industriel**
**31/33, rue de la Fédération**
**F-75015 Paris(FR)**

(72) Inventeur: **Michon, Maurice**
**30, Allée des Vergers**
**F-91210 Draveil(FR)**
Inventeur: **Rigny, Paul**
**16, Avenue Charles Péguy**
**F-92330 Sceaux(FR)**

(74) Mandataire: **Mongrédien, André et al**
**c/o BREVATOME 25, rue de Ponthieu**
**F-75008 Paris(FR)**

EP 0 286 762 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

La présente invention concerne un système permettant l'obtention d'une réaction sélective dans des processus photochimiques à partir de faisceaux lasers, comprenant des moyens de répartition de ces faisceaux.

L'invention s'applique aux processus photochimiques nécessitant l'action combinée de plusieurs émissions lumineuses de longueurs d'ondes différentes pour obtenir une réaction sélective telle qu'une séparation isotopique ou une photoisomérisation.

La séparation isotopique peut être utilisée par exemple pour éliminer un isotope incompatible avec l'utilisation industrielle d'un produit, comme dans le cas de la purification des métaux ou pour sélectionner un isotope utile, par exemple de carbone ou d'uranium.

La photoisomérisation de molécules permet, par le réarrangement des atomes d'une molécule préalablement excitée par des émissions lumineuses, d'obtenir une molécule de propriétés spectroscopiques et chimiques différentes.

Pour obtenir la réaction sélective recherchée, on peut procéder de façon connue en deux étapes. La première étape consiste à exciter sélectivement une espèce chimique ou isotopique à partir d'un ou plusieurs rayonnements lasers. La deuxième étape consiste à provoquer la transformation de l'espèce précédemment excitée par un dernier rayonnement laser d'énergie suffisante.

L'excitation sélective de l'espèce, c'est-à-dire de la molécule ou de l'atome, se fait de façon connue par passages successifs de la molécule ou de l'atome considéré sur des niveaux dont l'énergie est de plus en plus grande, par absorption de photons, chaque photon provenant d'un laser à impulsions de longueur d'onde particulière.

L'excitation sélective peut être obtenue dans certain cas par absorption d'un seul photon et donc par passage de la molécule ou de l'atome considéré sur un seul niveau d'énergie.

La transformation de l'espèce excitée est obtenue par irradiation de celle-ci par un faisceau laser d'une longueur d'onde telle qu'elle franchisse le niveau correspondant cette transformation. On obtient ainsi soit la formation d'une nouvelle molécule, soit l'ionisation d'une molécule ou d'un atome. On peut, de cette façon, distinguer l'espèce formée des autres espèces et l'en séparer.

La figure 1 représente un exemple de transitions à plusieurs niveaux dans l'$U^{235}$ permettant d'obtenir son ionisation. Ainsi pour séparer l'isotope $U^{235}$ de la vapeur d'uranium, on utilise un faisceau $S_1$ d'excitation sélective, constitué de deux faisceaux $S'_1$ et $S''_1$ de longueur d'ondes respectives $\lambda'_1$ et $\lambda''_1$ qui amènent les atomes de l'isotope $U^{235}$ sur deux niveaux successifs 1, 3. Un dernier faisceau $S_2$, de longueur d'onde $\lambda_2$, conduit les atomes excités d'$U^{235}$ dans un état d'ionisation 5.

L'énergie d'ionisation de l'isotope $U^{235}$ étant égale à 6,12 eV, les longueurs d'ondes $\lambda'_1$, $\lambda''_1$ et $\lambda_2$ sont chacune de l'ordre de 600 nm.

Pour optimiser la séparation isotopique de $U^{235}$, on peut faire intervenir une quatrième longueur d'onde $\lambda_1'''$ associée à un faisceau $S_1'''$ pour amener les atomes qui sont déjà sur un niveau d'énergie intermédiaire 7, peuplé par un processus thermique, sur le niveau 1 afin d'être ionisé après les irradiations successives aux longueurs d'ondes $\lambda''_1$ et $\lambda_2$.

Dans le reste du texte, on appellera $S_1$ le faisceau permettant l'excitation sélective de l'espèce considérée, $S_1$ pouvant contenir une seule longueur d'onde $\lambda_1$ ou résulter d'une superposition de faisceaux $S'_1$, $S''_1$, ...$S_1^{(n)}$ de longueur d'onde $\lambda'_1$, $\lambda''_1$, ...$\lambda_1^{(n)}$, avec n entier égal au moins à 1, et $S_2$ le faisceau de longueur d'onde $\lambda_2$ permettant l'ionisation ou la photodissociation de l'espèce préalablement excitée.

Ces différentes longueurs d'ondes sont obtenues de façon connue à partir de lasers à colorants (par exemple à rhodamine) excités par d'autres lasers qui peuvent être des lasers à vapeur de cuivre. On obtient ainsi des émissions lumineuses impulsionnelles de quelques dizaines de ns et de fréquence de récurrence de quelques kHz.

De façon connue (par exemple par FR-A-2341873), les faisceaux $S_1$ et $S_2$ sont envoyés suivant une même direction de propagation dans une enceinte contenant le corps dont on veut extraire une espèce chimique ou isotopique, ce corps étant sous forme d'un écoulement de vapeur. Les sections efficaces d'absorption des transitions correspondant à l'excitation sélective et à la transformation de l'espèce considérée peuvent être différentes. Les sections efficaces d'absorption des transitions correspondant à l'excitation sélective peuvent être 10 à 100 fois plus grande que celle correspondant à la transformation. Par ailleurs, pour conserver une bonne sélectivité, on ne peut opérer avec une puissance trop importante du faisceau $S_1$, en effet on aurait une perte de sélectivité due par exemple à l'élargissement par saturation ou à des transitions à plusieurs photons. Après interaction des faisceaux $S_1$ et $S_2$ avec l'espèce considérée, le faisceau $S_1$ est très atténué par rapport au faisceau $S_2$. On ne peut donc pas maintenir tout le long de leur parcours dans l'enceinte la présence simultanée des deux faisceaux. Il résulte de cette interaction que le faisceau $S_2$ est très mal utilisé, son énergie étant gaspillée dans la dernière partie du trajet où le faisceau $S_1$ est très atténué.

Les dispositifs connus de l'art antérieur ne permettent donc pas d'optimiser l'utilisation de ces faisceaux.

L'invention a pour but de remédier à cet inconvénient. Ce but est atteint par l'utilisation d'un dispositif permettant d'introduire en plusieurs endroits à travers la vapeur à traiter, le faisceau $S_1$ d'excitation sélective, ce faisceau pouvant résulter d'une superposition de faisceaux

$$S'_1, S''_1, \ldots S_1^{(n)}$$

de longueur d'onde $\lambda'_1$, $\lambda''_1 \ldots \lambda_1^{(n)}$, avec n entier égal au moins à 1, alors que le faisceau $S_2$ n'est introduit qu'une fois à l'entrée du dispositif.

De façon plus précise, l'invention a pour objet un système permettant l'obtention d'une réaction sélective dans des processus photochimiques, à partir de faisceaux lasers comprenant :

- dans une enceinte fermée, le corps dont on veut extraire une espèce chimique ou isotopique, ce corps étant sous forme d'un écoulement de vapeur,
- des sources lasers émettant, vers cette enceinte, un faisceau $S_1$ permettant une excitation sélective de l'espèce à extraire et un faisceau $S_2$ permettant une transformation de cette espèce excitée ; ce système est caractérisé en ce qu'il comporte en outre des moyens de répartition des faisceaux comprenant :
- des moyens pour superposer les faisceaux $S'_1$, $S''_1, \ldots S_1^{(n)}$, avec n entier égal au moins à 1, pour constituer plusieurs faisceaux $S_1$ que l'on introduit en plusieurs endroits à travers la vapeur à traiter,
- des moyens d'introduction dans l'enceinte des faisceaux $S_1$ résultants, et du faisceau $S_2$ de façon à les rendre colinéaires tout en les distinguant par une de leurs caractéristiques telles qu'une polarisation différente ou un sens de propagation opposé, ces moyens d'introduction étant répartis périodiquement sur des bras parallèles définissant des directions de propagation de ces faisceaux dans l'enceinte, de façon à optimiser l'utilisation des énergies lumineuses des divers faisceaux.

Selon une variante de réalisation du système de l'invention, celui-ci comprend en outre, des lames quart d'onde permettant d'obtenir une polarisation circulaire des faisceaux $S_1$ et $S_2$, dans le cas où il est intéressant d'avoir des faisceaux lumineux polarisés circulairement pour interagir avec la vapeur, ces moyens étant situés après et avant les moyens d'introduction.

Selon un autre mode de réalisation du système, les moyens d'introduction des faisceaux $S_1$ et $S_2$ dans l'enceinte comprennent des prismes de Glan dans lesquels ces faisceaux sont injectés avec deux polarisation orthogonales et selon des directions permettant après leur passage dans ces prismes d'être colinéaires. Chaque prisme est situé sur un bras aux endroits où $S_1$ est réintroduit dans l'enceinte.

Selon un autre mode de réalisation du système, celui-ci comprend des moyens de repli des faisceaux $S_1$ et $S_2$ selon des bras parallèles.

Selon un mode de réalisation du système correspondant à un fonctionnement en cavité, les moyens d'introduction des faisceaux $S_1$ et du faisceau $S_2$ dans l'enceinte comprennent un prisme de Glan à chaque extrémité d'un bras correspondant à une direction de propagation des faisceaux $S_1$ et $S_2$ dans la vapeur et sur chacun des bras créés dans l'enceinte. Chacun des faisceaux $S_1$ et $S_2$ est introduit avec la même polarisation dans un des prismes de Glan à chaque extrémité d'un bras et selon des directions permettant après leur passage dans ces prismes d'avoir la même direction de propagation mais en sens opposé.

Selon un autre mode de réalisation du système correspondant à un fonctionnement en cavité, celui-ci comprend des moyens de renvoi des faisceaux $S_1$ et $S_2$ sur eux-mêmes, ces moyens comprenant des miroirs-plans associés à des cellules de Pockels, chaque ensemble miroir-plan et cellule de Pockels étant situé à chaque extrémité des bras et des moyens de repli du faisceau $S_2$ vers d'autres bras, ces moyens comprenant une cellule de Pockels située sur chaque bras.

Selon un mode de réalisation du système, les moyens pour superposer les faisceaux $S'_1$, $S''_1, \ldots, S_1^{(n)}$ de manière à constituer les faisceaux $S_1$ comprennent un ensemble de lames semi-transparentes de coefficient de réflexion 0,5 qui divisent successivement en deux les différents faisceaux $S'_1$, $S''_1$ ..., $S_1^{(n)}$ tout en superposant les faisceaux divisés pour obtenir les différents faisceaux $S_1$ utilisés dans le système.

D'autres caractéristiques et avantages de l'invention ressortiront mieux de la description qui va suivre, donnée à titre purement illustratif et non limitatif en référence aux figures annexées dans lesquelles :

- la figure 1 déjà décrite, représente schématiquement un exemple de transitions à plusieurs niveaux dans l'$U^{235}$ permettant d'obtenir son ionisation,
- la figure 2 représente schématiquement un exemple de système conforme à l'invention,
- la figure 3 représente un autre exemple de système conforme à l'invention,
- les figures 4a et 4b représentent d'autres exemples de système conforme à l'invention,

- les figures 5a et 5b représentent schématiquement en 5a, un exemple de système conforme à l'invention fonctionnant en cavité et en 5b les différentes tensions appliquées en fonction du temps à des cellules de Pockels utilisées dans le système de la figure 5a,
- la figure 6 représente schématiquement un exemple de dispositif permettant de diviser successivement plusieurs faisceaux et de les superposer,
- la figure 7 représente un système permettant de vaporiser la matière dont on veut extraire une espèce isotopique et de collecter cette espèce sous forme ionique.

La figure 2 représente schématiquement un exemple de système conforme à l'invention. Ce système comprend une enceinte fermée 9 contenant le corps dont on veut extraire une espèce chimique ou isotopique, ce corps étant sous forme d'un écoulement de vapeur. Des sources lasers émettent vers cette enceinte 9 un faisceau $S_1$ pouvant être constitué par un ou plusieurs faisceaux $S'_1$, $S''_1$, ..., $S_1^{(n)}$, avec n entier au moins égal à 1, et un faisceau $S_2$. Les moyens 11 permettent de superposer les différents faisceaux $S'_1$, $S''_1$... $S_1^{(n)}$ pour obtenir plusieurs faisceaux $S_1$, ces moyens 11 seront par exemple ceux décrits dans la figure 6. Un faisceau $S_1$ correspondant à l'excitation sélective de l'espèce à extraire est introduit à plusieurs endroits régulièrement espacés dans l'enceinte 9, tandis que le faisceau $S_2$ correspondant à la transformation de cette espèce n'est introduit qu'une seule fois. Sur cette figure, les moyens d'introduction des faisceaux $S_1$ et $S_2$ dans l'enceinte 9 sont représentés par des prismes de Glan 13 tandis que les moyens de repli de ces faisceaux selon des bras 15 parallèles sont représentés par des miroirs-plans 17, 19, 21. Ces miroirs réfléchissent donc successivement à 90° les faisceaux $S_1$ et $S_2$ de façon à ce qu'ils traversent l'ensemble de l'enceinte 9 créant sur leur passage des zones d'interaction 23 entre les photons et certaines molécules ou atomes de la matière présente. Ces molécules ou atomes, suivant le cas, sont ceux qui ont des niveaux d'énergie correspondant à celle des photons des faisceaux $S_1$ et $S_2$ injectés dans l'enceinte 9.

La suite de la description permet de comprendre le fonctionnement du système représenté en figure 2.

Les deux faisceaux $S_1$ et $S_2$ sont introduits à partir d'un prisme de Glan 13 avec des directions et des polarisations 25, 27 orthogonales. Le faisceau $S_1$ a une polarité 25 dans le plan contenant les directions de propagation des faisceaux lasers, tandis que le faisceau $S_2$ a une polarisation 27 perpendiculaire à ce plan. La différence de polarisation entre les deux faisceaux $S_1$ et $S_2$ permet de les distinguer dans l'ensemble du système. Après passage à travers le prisme de Glan 13, les faisceaux $S_1$ et $S_2$ sont colinéaires. En effet, dans l'exemple de la figure 2, le prisme de Glan 13 est placé de telle sorte que le faisceau $S_1$ soit transmis et le faisceau $S_2$ soit réfléchi à 90°. Les deux faisceaux $S_1$ et $S_2$ sont alors superposés et traversent l'enceinte 9 contenant le corps vaporisé créant une zone d'interaction 23 photons-matière. Après traversée de l'enceinte 9 selon un premier bras 15, les faisceaux $S_1$ et $S_2$ sont réfléchis à 90° par un premier miroir-plan 17, puis par un deuxième miroir-plan 19, permettant de faire parcourir les faisceaux $S_1$ et $S_2$ en sens inverse, selon un deuxième bras 15 parallèle au premier. Lors de la traversée des faisceaux selon ce deuxième bras 15, une deuxième zone d'interaction 23 photons-matière est créé. A l'extrémité de ce bras, un miroir-plan 21 permet de réfléchir ces faisceaux sur un deuxième prisme de Glan 13. Lors de la traversée de ce prisme, le faisceau $S_2$ est à nouveau réfléchi à 90° à cause de sa polarisation tandis que le faisceau $S_1$ très atténué après les différentes interactions avec la matière, est transmis par le prisme et se perd dans le système.

On injecte alors à nouveau un faisceau $S_1$ de même polarisation que précédemment à travers ce deuxième prisme le Glan 13. Après traversée de ce prisme, le faisceau $S_1$ transmis se superpose au faisceau $S_2$ réfléchi, on retrouve ainsi les mêmes conditions que lors de la première introduction des faisceaux $S_1$ et $S_2$ dans le système. La suite des opérations est identique à celles décrites précédemment et est répétée de façon à ce que toute l'enceinte soit balayée par les faisceaux $S_1$ et $S_2$ suivant des bras parallèles créant ainsi des zones d'interaction 23 pratiquement adjacentes.

En fonction du type d'interaction photons-matière, il peut être intéressant d'avoir une polarisation circulaire 28 des faisceaux $S_1$ et $S_2$. Dans ce cas, il suffit d'introduire dans l'ensemble du système, une lame quart d'onde 31 entre le prisme de Glan 13 et l'entrée de l'enceinte 9 sur une direction de propagation des faisceaux, correspondant à un bras 15, et une autre lame quart d'onde 32 sur un bras 15 parcouru en sens inverse par les faisceaux, entre la sortie de l'enceinte 9 et le prisme de Glan 13 et ainsi de suite dans l'ensemble du dispositif. Ces lames quart d'onde 31, 32 sont constituées par exemple par des parallélépipèdes de Fresnel. L'association à chaque prisme 13 d'une lame quart d'onde 31, 32 permet d'obtenir à partir des faisceaux $S_1$ et $S_2$ polarisés rectilignement, une polarisation circulaire et inversement.

Dans l'exemple de la figure 2, le faisceau $S_1$ passe deux fois successivement dans l'enceinte 9 avant d'être réinjecté dans l'enceinte mais si celui-ci n'est pas trop atténué après les différentes interactions avec la matière, on peut optimiser son utilisation en lui faisant effectuer plusieurs traversées de l'enceinte 9 dans les deux sens et selon des directions formant des bras 15 parallèles, jusqu'à ce qu'il soit très atténué. Pour cela, on ajoute des séries de miroirs plans sur le parcours des faisceaux $S_1$ et $S_2$ afin que ceux-ci soient réfléchis comme précédemment, autant de fois que nécessaire.

Pour synchroniser les impulsions des faisceaux réinjectés $S_1$ et celles du faisceau $S_2$, on utilise des lignes à retard, non représentées sur la figure, qui peuvent être constituées par une succession de miroirs plans entre lesquelles s'effectuent des réflexions successives.

Différentes modifications peuvent être effectuées sur le système précédemment décrit.

Ainsi, la figure 3 représente un exemple de système conforme à l'invention permettant une meilleure utilisation des photons et de la vapeur.

Le miroir plan 21 est remplacé par un prisme de Glan 20 disposé de façon à réfléchir à 90° le faisceau $S_2$ seulement et à transmettre le faisceau $S_1$ très atténué. Un autre faisceau $S_1$ est alors réinjecté à l'entrée de l'enceinte 9 à ce niveau c'est-à-dire à l'extrémité du bras 15 parcouru en sens inverse par le faisceau $S_1$ précédent. Ce faisceau $S_1$ va donc effectuer le parcours en sens inverse. Il en est de même dans le reste du système. De plus, un faisceau $S_2$ est réinjecté au niveau de la sortie du faisceau $S_2$ c'est-à-dire en fin de parcours du faisceau $S_2$ dans l'ensemble de l'enceinte 9. Les faisceaux $S_1$ et $S_2$ traversent de cette façon la vapeur dans les deux sens, interagissant ainsi suffisamment avec les molécules ou atomes situés en fin de parcours de ces faisceaux.

Une variante de ce dernier dispositif, pour une meilleure utilisation du faisceau $S_2$, est obtenue par l'adjonction d'un miroir 22 en fin de parcours du faisceau $S_2$ dans l'enceinte 9, de façon à le renvoyer dans celle-ci selon les mêmes directions de propagation que celles du faisceau $S_2$ incident. Après un double passage dans l'enceinte 9, $S_2$ est alors presque totalement absorbé.

Les figures 4a et 4b représentent d'autres exemples de système conforme à l'invention, dans lesquels des faisceaux $S_1$ sont introduits à l'extrémité opposée de l'enceinte 9 sur chaque bras 15.

Ainsi, sur la figure 4a, une deuxième source laser identique à la première a été ajoutée, elle permet d'introduire symétriquement par rapport aux faisceaux $S_1$ issus des moyens de superposition 11, des faisceaux $S_1$ provenant de moyens de superposition 12 identiques à ces moyens 11.

Une variante du système décrit ci-dessus, consiste comme représnté sur la figure 4b, à renvoyer sur lui-même chaque faisceau $S_1$ à l'aide d'un miroir plan 26 situé à l'extrémité opposée de l'entrée du faisceau $S_1$, également pour chaque bras 15. Dans ces deux systèmes, on place un deuxième prisme de Glan 24 sur chaque bras 15 avant l'entrée du faisceau $S_1$ provenant du deuxième laser ou avant le miroir, afin de dévier le faisceau $S_2$ vers le reste de l'enceinte 9.

Dans le système décrit précédemment, on a utilisé des prismes de Glan, mais on peut utiliser également tout autre dispositif permettant de superposer deux faisceaux lumineux de polarité orthogonale pénétrant dans celui-ci suivant des directions perpendiculaires ou de séparer de tels faisceaux entrant dans celui-ci avec une même direction.

De même à la place des miroirs plans, on peut utiliser tout autre dispositif permettant de réfléchir à 90° des faisceaux polarisés en conservant leur polarité.

Les figures 5a et 5b représentent un exemple de système conforme à l'invention, fonctionnant en cavité. Dans cet exemple, pour utiliser au mieux les molécules ou les atomes se trouvant dans les zones d'interaction 23, on fait traverser plusieurs fois ces zones par les faisceaux lasers $S_1$ et $S_2$. Un tel dispositif est représenté sur la figure 5a.

Sur cette figure, est représentée une enceinte fermée 9 contenant le corps sous forme d'un écoulement de vapeur dont on veut extraire une espèce chimique ou isotopique. Des sources lasers émettent dans cette enceinte un faisceau $S_1$ pouvant être constitué par plusieurs faisceaux $S'_1$, $S''_1$, ... $S_1^{(n)}$, avec n entier égal au moins à 1, et un faisceau $S_2$.

Les moyens 11 permettent de superposer les différents faisceaux $S'_1$, $S''_1$, ... $S_1^{(n)}$ pour obtenir plusieurs faisceaux $S_1$. Un faisceau $S_1$, correspondant à l'excitation sélective de l'espèce à extraire, est introduit à plusieurs endroits régulièrement espacés dans l'enceinte 9 selon des directions parallèles formant des bras 15, tandis que le faisceau $S_2$, correspondant à la transformation de cette espèce, n'est introduit qu'une seule fois dans l'enceinte 9 et parcourt celle-ci selon les mêmes directions formant les bras 15.

Sur cette figure, les moyens d'introduction des faisceaux $S_1$ et $S_2$ dans l'enceinte 9 sont représentés par des prismes de Glan 29, 30 chaque faisceau $S_1$ étant injecté à travers un prisme 29 tandis que le faisceau $S_2$ est injecté à travers un prisme 30. Les moyens de renvoi des faisceaux $S_1$ et $S_2$ sur eux-mêmes sont représentés par des miroirs plans 33, 35 associés respectivement à des cellules de Pockels 37, 39 tandis que les moyens de repli du faisceau $S_2$ vers d'autres directions de propagation formant des bras 15 parallèles sont représentés par une cellule de Pockels 41 associée au prisme de Glan 30.

Ainsi les faisceaux $S_1$ et $S_2$ sont injectés res-

pectivement à travers un prisme de Glan 29, 30 avec la même polarisation 27 perpendiculaire au plan contenant les directions de propagation des faisceaux et selon les mêmes directions de propagation formant des bras 15. Les faisceaux $S_1$ et $S_2$ ont donc deux sens de propagation opposés qui permettent de les distinguer dans l'ensemble du système malgré leur même polarisation 27.

Les ensembles miroirs-plans 33, 35 et cellules de Pockels 37, 39 permettent de faire traverser un certain nombre de fois les faisceaux $S_1$ et $S_2$ dans la même zone d'interaction 23 avant d'envoyer le faisceau $S_2$ seul, par la cellule de Pockels 41, dans la zone d'interaction 23 suivante.

Les tensions appliquées aux différentes cellules de Pockels en fonction du temps sont représentées sur la figure 5b.

La suite de la description permet de comprendre le fonctionnement du système représenté en figure 5a.

Le faisceau $S_1$ de polarisation 27 est introduit dans l'enceinte 9 par injection à travers un prisme de Glan 29 après une réflexion à 90° sur un miroir-plan 43. Ce faisceau est réfléchi par le prisme de Glan 29 puis passe à travers une première cellule de Pockels 37. A cette cellule est appliquée pendant une durée $t_1$, (figure 5b), une tension "quart d'onde" $V_{\lambda/4}$, 45. Après traversée de la cellule 37 la polarisation du faisceau $S_1$ est circulaire. $S_1$ est ensuite réfléchi sur lui-même par un miroir-plan 33 perpendiculaire à la direction de propagation du faisceau $S_1$, ce dernier retraverse alors la cellule 37. Après son second passage dans la cellule 37, le faisceau $S_1$ a une polarisation perpendiculaire à celle du faisceau incident et de ce fait il est, cette fois, transmis par le prisme de Glan 29. En même temps que le faisceau $S_1$, le faisceau $S_2$ est introduit dans l'enceinte 9 à l'autre extrémité du bras 15 de façon symétrique. Il est injecté tout d'abord travers un prisme de Glan 30 avec la même polarisation 27, puis réfléchi par celui-ci, il passe à travers une cellule de Pockels 39 sur laquelle une tension quart d'onde 47 est également appliquée pendant la même durée $t_1$. Un miroir-plan 35, perpendiculaire à la direction de propagation de celui-ci réfléchit le faisceau sur lui-même, lequel repasse dans la cellule de Pockels 39. Après son second passage dans la cellule 39, le faisceau $S_2$ a une polarisation perpendiculaire à celle du faisceau incident. Celui-ci est alors transmis par le prisme de Glan 30. La cellule de Pockels 41 est passive, c'est-à-dire qu'elle ne modifie pas l'état du rayonnement qui la traverse. Les deux faisceaux $S_1$ et $S_2$ ont donc la même direction de propagation, correspondant à un bras 15 mais sont de sens opposé. Ils créent lors de leur passage dans l'enceinte 9 une zone d'interaction 23 entre photons et matière. Ces faisceaux sont réfléchis vers la zone d'interaction 23 à chaque fois qu'ils atteignent les extrémités d'un bras 15 par un ensemble : cellule de Pockels 37, (39) et miroir-plan 33, (35).

La tension nulle appliquée sur la cellule de Pockels 41 est maintenue tant que l'on veut faire passer les faisceaux $S_1$ et $S_2$ dans une même zone d'interaction 23. Quand le nombre d'allers-retours effectués dans une même zone 23 par les faisceaux $S_1$ et $S_2$ est tel que le faisceau $S_1$ est totalement absorbé ou très atténué, on libère le faisceau $S_2$ en appliquant sur la cellule 41 une tension $V_{\lambda/2}$, 49 à l'instant $t_2$. En un seul passage du faisceau $S_2$ dans la cellule 41, la polarisation du faisceau $S_2$ résultant est perpendiculaire à celle du faisceau incident. Celui-ci est alors réfléchi à 90° par le prisme de Glan 30 vers un ensemble similaire à celui précédemment décrit.

Pour que les faisceaux $S_1$ et $S_2$ injectés à chaque extrémité de l'enceinte 9 se superposent dans les zones d'interaction 23, ces dernières doivent avoir une longueur voisine de $C\Delta t$ où C représente la vitesse de la lumière dans le milieu gazeux considéré et $\Delta t$, la largeur à mi-hauteur des impulsions lumineuses des faisceaux lasers. La longueur de la cavité optique dans laquelle se trouve le système doit être environ deux fois plus grande que celle des zones d'interaction 23 de façon à ce que pendant l'injection, c'est-à-dire avant le temps $t_1$, les photons introduits par une extrémité ne ressortent pas par l'autre.

Ce fonctionnement en cavité permet donc d'agir avec toute l'intensité initialement disponible sur le faisceau $S_2$ et d'utiliser simultanément toute l'énergie émise par les lasers.

De même que pour le dispositif décrit dans la figure 2, les impulsions du faisceau $S_1$ doivent être synchronisées avec celles du faisceau $S_2$, la durée de vie des transitions étant environ égale à celle des impulsions, c'est-à-dire de l'ordre de quelques dizaines de ns. Pour cela on utilise une ligne à retard qui est une "cavité sans atomes". On injecte pour cela à travers un prisme de Glan le faisceau $S_1$ qui est réfléchi vers une zone extérieure aux zones d'interaction 23. Dans cette zone, le faisceau $S_1$ effectue des allers-retours successifs sur lui-même grâce à des miroirs-plans placés à chaque extrémité de cette cavité et est libéré comme précédemment par application d'une tension sur une cellule de Pockels située sur son parcours.

La figure 6 représente un exemple de moyens 11 permettant de superposer plusieurs faisceaux constituant le faisceau $S_1$.

Comme on l'a vu précédemment, le faisceau $S_1$ d'excitation sélective est constitué généralement par plusieurs faisceaux $S'_1$, $S''_1$, ... $S_1^{(n)}$ de longueurs d'ondes respectivement

$$\lambda'_1, \lambda''_1, \ldots \lambda_1^{(n)},$$

avec n entier au moins égal à 1. Ces faisceaux doivent donc être à la fois divisés puis superposés pour être injectés dans le système conforme à l'invention. On utilise donc pour diviser et superposer plusieurs faisceaux un ensemble de miroirs-plans placés à 45° par rapport à la direction de propagation de ces faisceaux.

Dans l'exemple de la figure 6, on considère comme dans le cas de la séparation isotopique de $U^{235}$ de la vapeur d'uranium trois faisceaux $S'_1$, $S''_1$, et $S_1'''$ de longueurs d'ondes respectivement $\lambda'_1$, $\lambda''_1$, et $\lambda_1'''$. Ces faisceaux sont divisés et superposés par des lames séparatrices successives 51, 53, 55, 57 de coefficient de réflexion 0,5, les faisceaux résultants $S_1$ étant dirigés dans des directions de propagation parallèles par des miroirs-plans 59, 61, 63, 65 à réflexion totale vers les différentes entrées de l'enceinte du système conforme à l'invention. Dans cet exemple, les miroirs plans 60 et 62 permettent uniquement d'envoyer les faisceaux $S'_1$ et $S_1'''$ respectivement sur les lames séparatrices 51 et 57.

Ainsi, une moitié des faisceaux $S'_1$ et $S''_1$ arrivant sur la lame 51 suivant deux directions orthogonales, est transmise tandis que l'autre moitié est réfléchie. Chaque moitié transmise de l'un des faisceaux se superpose à la moitié réfléchie de l'autre faisceau et inversement. Ces moitiés de faisceaux superposés sont divisées à nouveau en deux par les lames 53 et 55. De même, le faisceau $S_1'''$ est divisé en deux par la lame 57, les faisceaux résultants étant à nouveau divisés par les lames 53 et 55 se superposant ainsi aux faisceaux divisés provenant de $S'_1$ et $S''_1$. On obtient de cette façon quatre faisceaux $S_1$ résultant de la superposition et la division en quatre des faisceaux $S'_1$, $S''_1$ et $S_1'''$. Par des divisions successives on peut obtenir autant de faisceaux $S_1$ de même longueur d'onde que le système conforme à l'invention en nécessite.

La figure 7 représente une installation connue permettant de vaporiser la matière dont on veut extraire un isotope et de collecter cet isotope lorsqu'il est ionisé. Ce type d'installation est utilisé pour séparer l'isotope $U^{235}$ de l'uranium ou pour purifier le palladium en éliminant l'isotope $Pd^{107}$. La matière, sous forme de lingot 67 est chauffée par bombardement électronique suivant une ligne 69, jusqu'à la température d'évaporation de cette matière.

Les atomes vaporisés ont une énergie cinétique importante. Les atomes vaporisés l'intérieur d'un angle $\theta$ sont alors irradiés par les faisceaux lasers $S_1$ et $S_2$ introduits dans cette installation suivant un système conforme à l'invention. Le faisceau $S_1$ excite sélectivement $U^{235}$ tandis que le faisceau $S_2$ ionise les atomes préalablement excités. De part et d'autre des faisceaux lasers qui traversent la vapeur et interagissent avec celle-ci sont disposées des plaques collectrices 71 entre lesquelles un champ électrique est créé.

Les atomes ionisés sont déviés par ce champ puis collectés par les plaques 71. Les atomes neutres non ionisés poursuivent leur chemin vers une cible 72 où la vapeur se condense.

Le nombre de plaques 71 nécessaires pour exploiter au mieux les atomes émis dans l'angle $\theta$ est déterminé par l'espacement maximal entre les plaques 71 compatible avec un minimum d'échange de charges entre les ions et les atomes neutres.

Le système conforme à l'invention est, comme on l'a vu précédemment, applicable également au procédé moléculaire de séparation isotopique. Dans ce cas, les molécules sont tout d'abord excitées par un premier faisceau $S_1$ puis photodissociées par un deuxième faisceau $S_2$. La séparation de ces molécules dissociées se fait notamment par condensation.

Ainsi, le système conforme à l'invention, quelles que soient les variantes utilisées, permet de compenser la faible section efficace de la transition correspondant à la transformation de l'espèce à extraire, c'est-à-dire de l'ionisation ou de la photodissociation, tout en optimisant l'interaction photons-matière.

**Revendications**

1. Système permettant l'obtention d'une réaction sélective dans des processus photochimiques à partir de faisceaux lasers, comprenant :
   - dans une enceinte fermée (9), le corps dont on veut extraire une espèce, ce corps étant sous forme d'un écoulement de vapeur,
   - des sources lasers émettant vers cette enceinte (9), un faisceau $S_1$ permettant une excitation sélective de l'espèce à extraire et un faisceau $S_2$ permettant une transformation de cette espèce excitée,

   caractérisé en ce qu'il comporte des moyens de répartition des faisceaux comprenant :
   - des moyens (11, 12) pour superposer des faisceaux $S'_1$, $S''_1$, ...,$S_1^{(n)}$, avec n entier égal au moins à 1, et pour constituer plusieurs faisceaux $S_1$ que l'on introduit en plusieurs endroits à travers la vapeur à traiter,
   - des moyens (13, 20, 24, 29, 30) d'introduction dans l'enceinte des faisceaux résultants $S_1$ et du faisceau $S_2$ de façon à les rendre colinéaires tout en les distinguant par une de leurs caractéristiques,

ces moyens d'introduction étant répartis périodiquement sur des bras parallèles (15) définissant des directions de propagation de ces faisceaux dans l'enceinte (9).

2. Système selon la revendication 1, caractérisé en ce qu'il comprend en outre, des lames quart d'onde (31, 32) permettant d'obtenir une polarisation circulaire (28) des faisceaux $S_1$ et $S_2$, situés après et avant les moyens d'introduction (13).

3. Système selon l'une quelconque des revendications 1 et 2, caractérisé en ce que les moyens d'introduction des faisceaux $S_1$ et du faisceau $S_2$ dans l'enceinte (9) comprennent des prismes de Glan (13, 20, 24) dans lesquels ces faisceaux sont injectés avec deux polarisations orthogonales (25, 27) et selon des directions permettant après leur passage dans ces prismes d'être colinéaires ou orthogonaux, chaque prisme étant situé sur un bras (15) aux endroits où $S_1$ est introduit ou réintroduit dans l'enceinte (9).

4. Système selon l'une quelconque des revendications 1, 2 et 3, caractérisé en ce qu'il comprend en outre des moyens de repli (17, 19, 21, 20, 24) des faisceaux $S_1$ et $S_2$ selon des bras (15) parallèles.

5. Système selon la revendication 1, caractérisé en ce que les moyens d'introduction des faisceaux $S_1$ et du faisceau $S_2$ dans l'enceinte (9), en fonctionnement en cavité, comprennent un prisme de Glan (29, 30) à chaque extrémité d'un bras (15) correspondant à une direction de propagation des faisceaux $S_1$ et $S_2$ dans la vapeur et sur chacun des bras (15) dans l'enceinte (9), chacun des faisceaux $S_1$ et $S_2$ est introduit avec la même polarisation (27) dans un des prismes de Glan (29, 30) et selon des directions permettant après leur passage dans ces prismes (29, 30) d'avoir la même direction de propagation, correspondant à un bras (15), mais en sens opposé.

6. Système selon l'une quelconque des revendications 1 et 5, caractérisé en ce qu'en fonctionnement en cavité, il comprend des moyens de renvoi des faisceaux $S_1$ et $S_2$ sur eux-mêmes, ces moyens comprenant des miroirs-plans (33, 35) associés à des çellules de Pockels (37, 39), les ensembles miroir-plan et cellule de Pockels (33, 37) et (35, 39) étant situés symétriquement à chaque extrémité des bras (15) et des moyens de repli du faisceau $S_2$ vers d'autres bras (15), ces moyens comprenant une cellule de Pockels (41) située sur chaque bras (15).

7. Système selon l'une quelconque des revendications 1 à 6, caractérisé en ce que les moyens (11, 12) pour superposer les faisceaux $S'_1$, $S''_1$,..., $S_1^{(n)}$ de manière constituer les faisceaux $S_1$ comprennent un ensemble de lames semi-transparentes (51, 53, 55, 57,...) de coefficient de réflexion 0,5 qui divise successivement en deux les différents faisceaux $S'_1$, $S''_1$, ... $S_1^{(n)}$ tout en superposant les faisceaux divisés pour obtenir les différents faisceaux $S_1$ utilisés dans le système.

## Claims

1. System making it possible to obtain a selective reaction in photochemical processes on the basis of laser beams comprising:
   - in a sealed enclosure (9), the substance whereof a species is to be extracted, said substance being in the form of a vapour flow
   - laser sources emitting towards said enclosure (9) a beam $S_1$ permitting a selective excitation of the species to be extracted and a beam $S_2$ permitting a transformation of said excited species, characterized in that it comprises means for distributing the beams having:
   - means (11, 12) for superimposing the beams $S'_1$, $S''_1$, ... $S_1^{(n)}$ with n being an integer at least equal to 1, and for constituting several beams $S_1$ introduced at several points through the vapour to be treated,
   - means (13, 20, 24, 20, 30) for introducing into the enclosure the resultant beams $S_1$ and also beam $S_2$ so as to make them colinear, whilst distinguishing them by one of their characteristics, said introduction means being periodically distributed on parallel arms (15) defining the propagation directions of said beams in the enclosure.

2. System according to claim 1, characterized in that it also comprises quarter-wave plates (31, 32) making it possible to obtain a circular polarization (28) of beams $S_1$ and $S_2$, located upstream and downstream of the introduction means (13).

3. System according to either of the claims 1 and 2, characterized in that the means for introducing beams $S_1$ and beam $S_2$ into the enclosure

(9) are constituted by Glan prisms (13, 20, 24) into which said beams are injected with two orthogonal polarizations (25, 27) and in directions which, following their passage into the prisms, can be colinear or orthogonal, each prism being located on an arm (15) at the points where $S_1$ is introduced or reintroduced into the enclosure (9).

4. System according to any one of the claims 1, 2 and 3, characterized in that it also comprises means (17, 19, 21, 20, 24) for inverting the beams $S_1$ and $S_1$ along parallel arms (15).

5. System according to claim 1, wherein the means for introducing beams $S_1$ and beam $S_2$ into the enclosure (9), in cavity operation, comprise a Glan prism (29, 30) at each end of an arm (15) corresponding to a propagation direction of beams $S_1$ and $S_2$ into the vapour and on each of the arms in the enclosure, each of the beams $S_1$ and $S_2$ being introduced with the same polarization (27) into one of the Glan prisms (29, 30) and in directions which, following their passage into said prisms (29, 30), make it possible to have the same propagation direction, corresponding to an arm (15), but of the opposite sense.

6. System according to either of the claims 1 and 5, characterized in that in cavity operation, it comprises means for reflecting the beams $S_1$ and $S_2$ on to themselves, said means comprising plane mirrors (33, 35) associated with Pockels cells (37, 39), the assemblies (33, 37/35, 39) constituted by the plane mirrors and Pockels cells being positioned symmetrically at each end of the arms (15) and means for inverting beam $S_2$ towards other arms, said means comprising a Pockels cell (41) located on each arm (15).

7. System according to any one of the claims 1 to 6, characterized in that the means (11, 12) for superimposing the beams $S'_1$, $S''$, ..., $S_1^{(n)}$ so as to form beams $S_1$ incorporate a group of semitransparent plates (51, 53, 55, 57, etc.) having a reflection coefficient 0.5, which successively splits the different beams $S'_1$, $S''_1$, ..., $S_1^{(n)}$ into two, whilst superimposing the split beams in order to obtain the different beams $S_1$ used in the system.

**Patentansprüche**

1. System, das das Erreichen einer selektiven Reaktion in einem photochemischen Prozeß durch Laserstrahlen ermöglicht, mit:

- dem Körper in einer ersten, geschlossenen Hülle (9), aus dem man eine Sorte extrahieren möchte, wobei dieser Körper in der Form eines Dampfstrahls vorliegt,
- Laserquellen, die auf diese Hülle (9) ein Lichtbündel $S_1$, das die selektive Anregung der zu extrahierenden Sorte ermöglicht, und ein Lichtbündel $S_2$ strahlen, das eine Umwandlung dieser angeregten Sorte ermöglicht, dadurch gekennzeichnet, daß es eine Vorrichtung zum Aufteilen der Strahlen aufweist, die umfaßt :
- Vorrichtungen (11, 12) zum Überlagern der Strahlen $S'_1$, $S'_1$, ..., $S^{(n)}_1$, wobei n eine ganze Zahl wenigstens gleich 1 ist, und zum Bilden von mehreren Strahlen $S_1$, die man an mehreren Stellen durch den zu behandelnden Dampf einführt,
- Vorrichtungen (13, 20, 24, 29, 30) zum derartigen Einführen der resultierenden Strahlen $S_1$ und des Strahls $S_2$ in die Hülle, daß sie kolinear gemacht werden, wobei sie durch eines ihrer Merkmale unterschieden werden, wobei diese Einführungsvorrichtungen periodisch auf parallelen Zweigen (15) verteilt sind, die die Ausbreitungsrichtung dieser Strahlen in der Hülle (9) bestimmen.

2. System nach Anspruch 1, dadurch gekennzeichnet, daß es außerdem Viertelwellenlängenplättchen (31, 32) umfaßt, die ermöglichen, eine zirkulare Polarisation (28) der Strahlen $S_1$ und $S_2$ zu erhalten, und die hinter und vor den Einführvorrichtungen (13) angeordnet sind.

3. System nach einem der Ansprüche 1 und 2, dadurch gekennzeichnet, daß die Einführvorrichtungen für die Strahlen $S_1$ und den Strahl $S_2$ in die Hülle (9) Glanprismen (13, 20, 24) umfaßt, in die diese Strahlen mit zwei orthogonalen Polarisierungen (25, 27) und entlang von Richtungen gestrahlt werden, die nach deren Durchgang durch diese Prismen ermöglichen, daß sie kolinear oder orthogonal sind, wobei jedes Prisma auf einem Zweig (15) an Stellen angeordnet ist, wo $S_1$ in die Hülle eingestrahlt oder wiedereingestrahlt wird.

4. System nach einem der Ansprüche 1, 2 und 3, dadurch gekennzeichnet, daß es außerdem Vorrichtungen zum Umlenken (17, 19, 21, 20, 24) der Strahlen $S_1$ und $S_2$ entlang den parallelen Zweigen (15) umfaßt.

5. System nach Anspruch 1, dadurch gekennzeichnet, daß die Einführvorrichtungen für die

Strahlen $S_1$ und $S_2$ in die Hülle (9) beim Funktionieren als Resonator ein Glanprisma (29, 30) an jedem Ende eines Zweigs (15), der einer Ausbreitungsrichtung der Strahlen $S_1$ und $S_2$ in dem Dampf entspricht, und auf jedem Zweig (15) in der Hülle (9) aufweisen, wobei jeder der Strahlen $S_1$ und $S_2$ mit der gleichen Polarisation (27) in eines der Glanprismen (29, 30) entlang von Richtungen eingeführt wird, die nach deren Durchgang durch diese Prismen (29, 30) ermöglichen, die gleiche, einem Zweig 15) entsprechende aber entgegengesetzte Ausbreitungsrichtung zu besitzen.

6. System nach einem der Ansprüche 1 und 5, dadurch gekennzeichnet, daß es beim Funktionieren als Resonator eine Vorrichtung zum Zurückschicken der Strahlen $S_1$ und $S_2$ auf sich selbst umfaßt, wobei diese Vorrichtung Planspiegel (33, 35) umfaßt, die mit Pockelszellen (37, 39) verbunden sind, wobei die Anordnungen von Planspiegel und Pockelszelle (33, 37) und (35, 39) symmetrisch an jedem Zweigende (15) und an den Umlenkvorrichtungen für den Strahl $S_2$ auf andere Zweige angeordnet sind, wobei diese Vorrichtungen eine auf jedem Zweig (15) angeordnete Pockelszelle (41) umfassen.

7. System nach einem der Ansprüche 1 bis 6, dadurch gekennzeichnet, daß die Vorrichtungen (11, 12) zum Überlagern der Strahlen $S'_1$, $S'_1$, ..., $S^{(n)}_1$, so daß sie die Strahlen $S_1$ bilden, eine Anordnung halbtransparenter Blättchen (51, 53, 55, 57, ...) mit einem Reflektionskoeffizienten von 0,5 umfassen, die sukzessive die verschiedenen Strahlen $S'_1$, $S'_1$, ..., $S^{(n)}_1$ in zwei aufteilt, wobei die geteilten Strahlen überlagert werden, um die verschiedenen, im System verwendeten Strahlen $S_1$ zu erhalten.

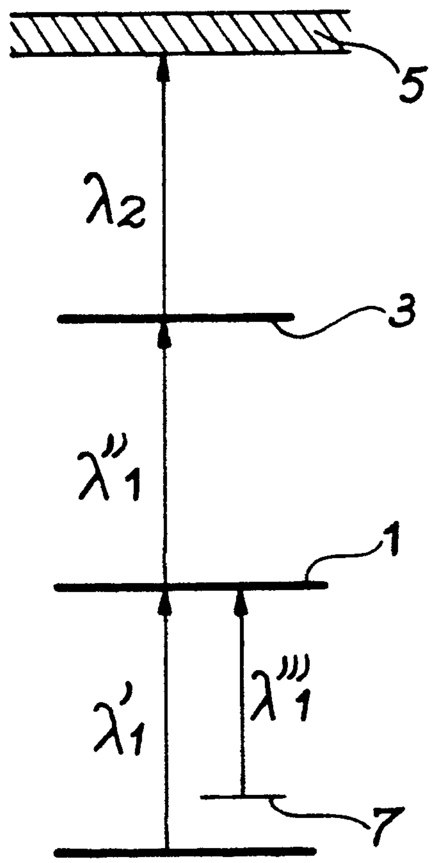


FIG. 1

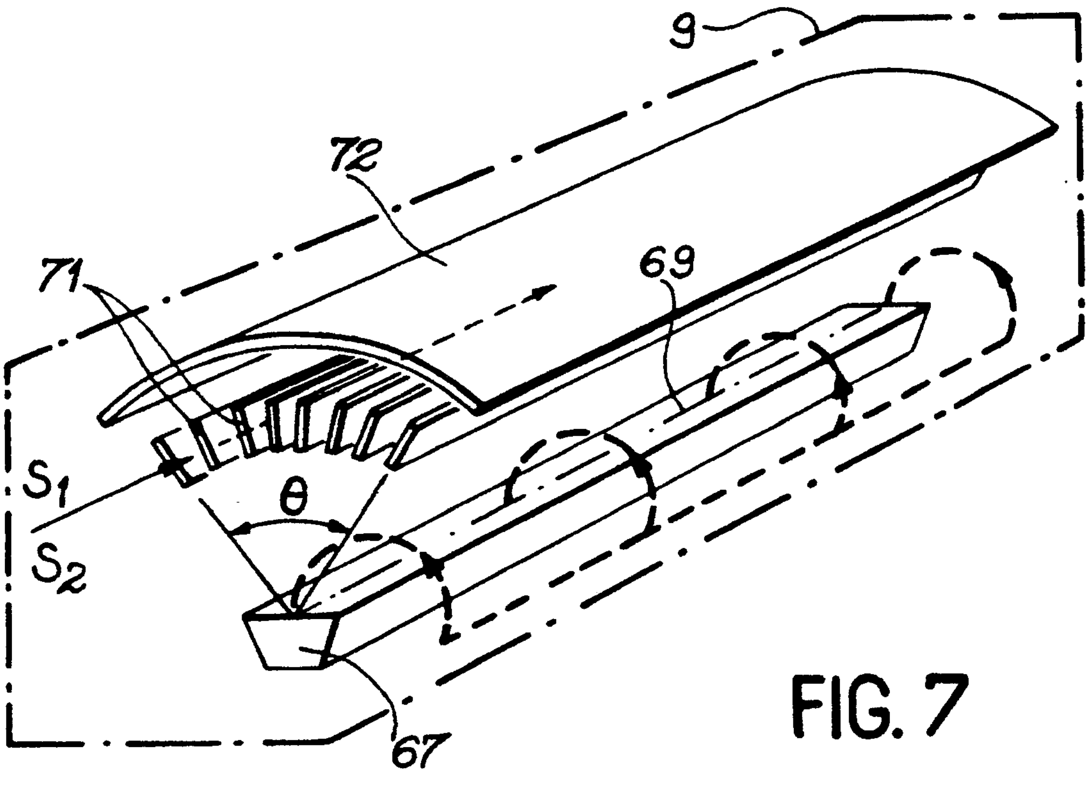


FIG. 7

FIG. 2

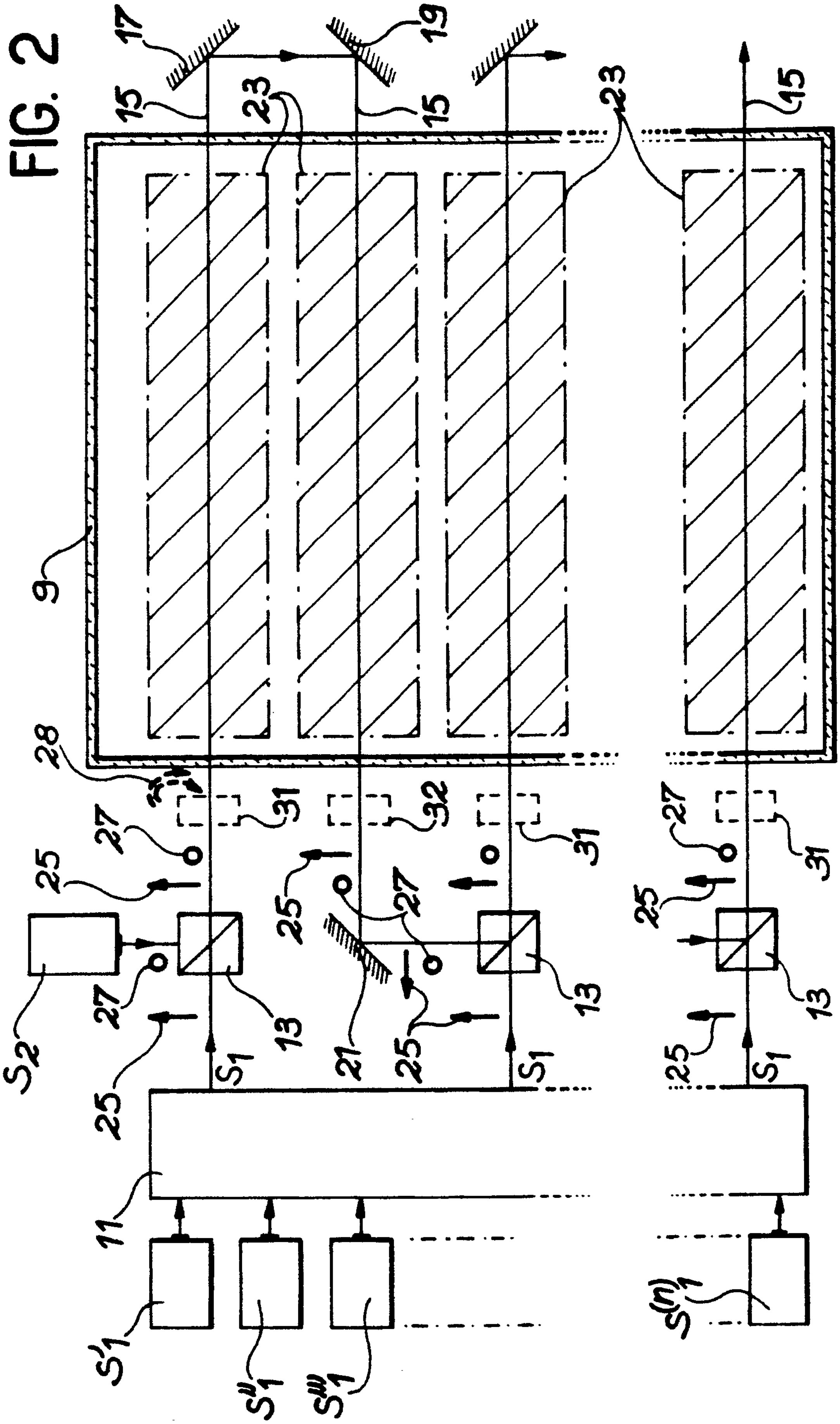
17
19
15
23
15
23
15
9
28
31
32
31
27
25
27
25
27
31
27
25
S2
27
13
21
25
13
25
13
25
S1
S1
25
S1
11
S1'
S1''
S1'''
S1(n)

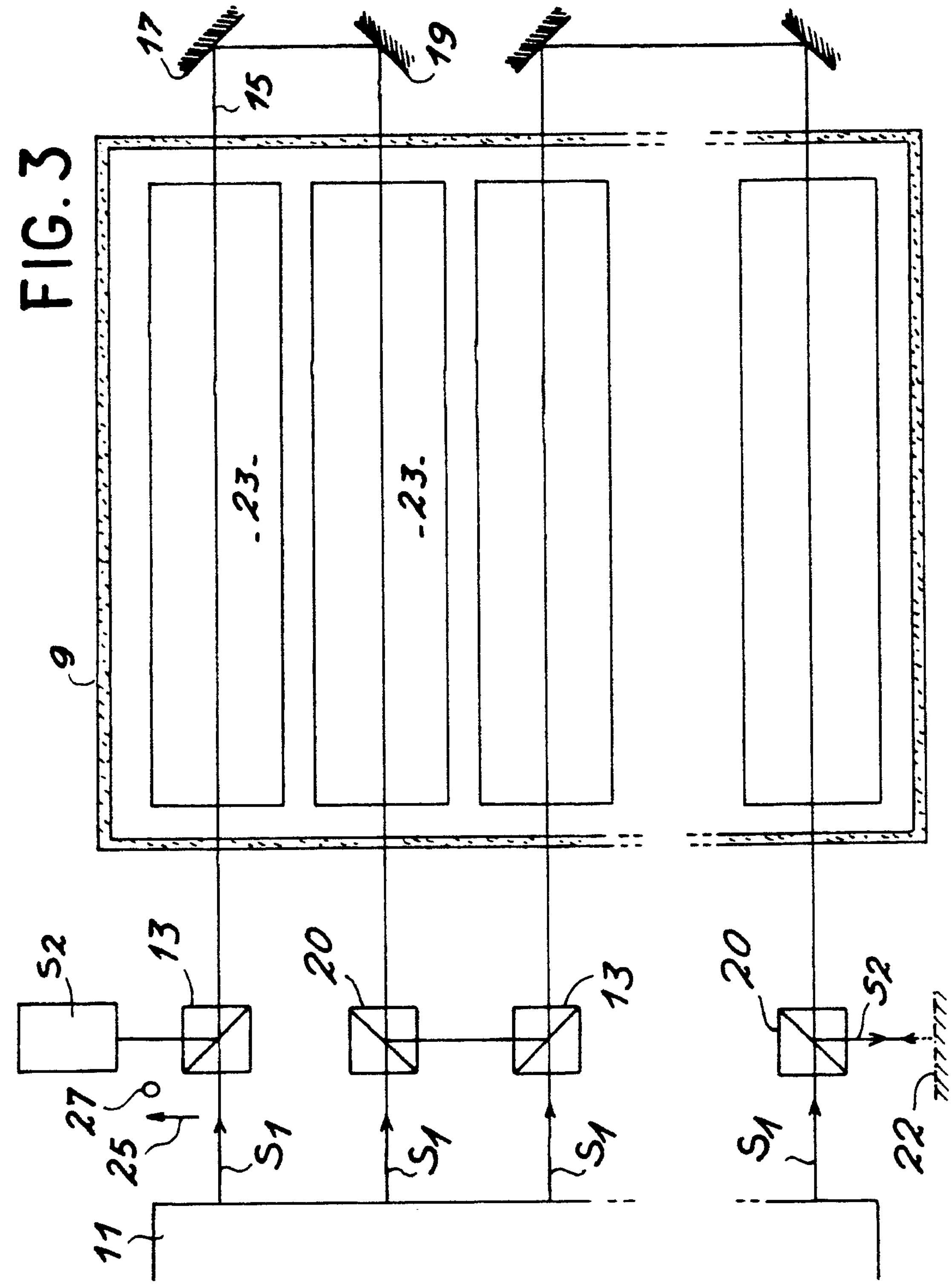


FIG. 3

FIG. 4a

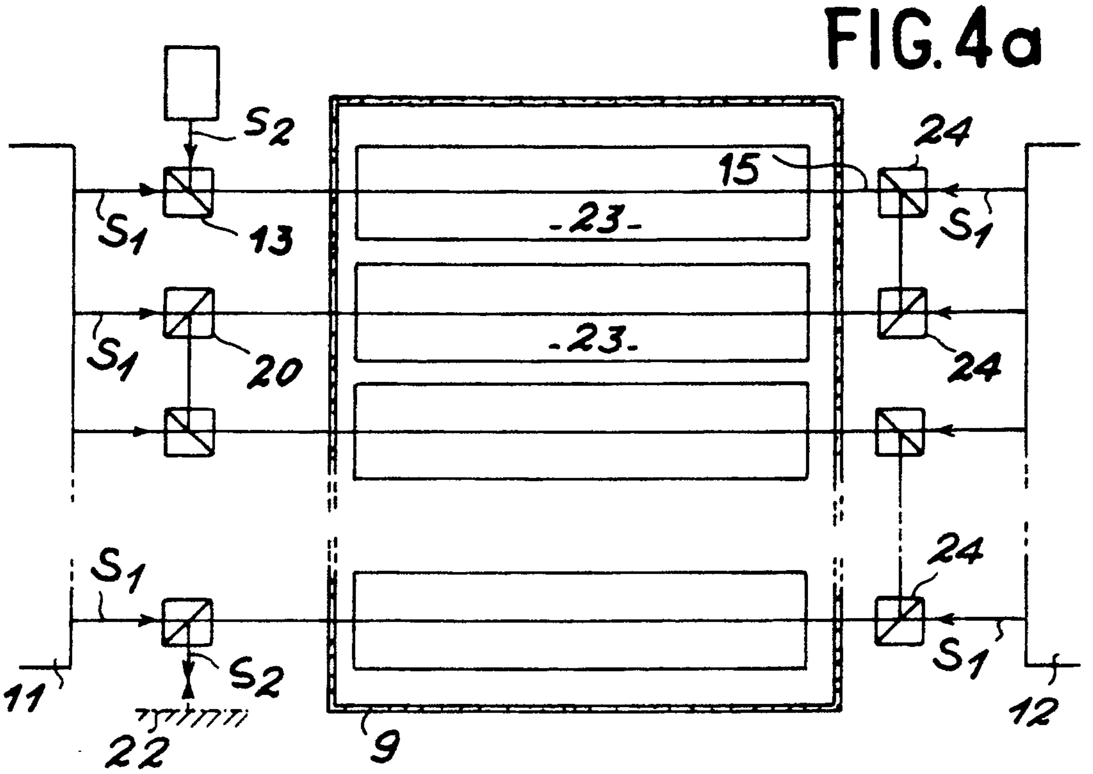
S2
24
15
-23-
S1
S1
13
S1
-23-
20
24
24
S1
S2
S1
11
22
9
12

FIG. 4b

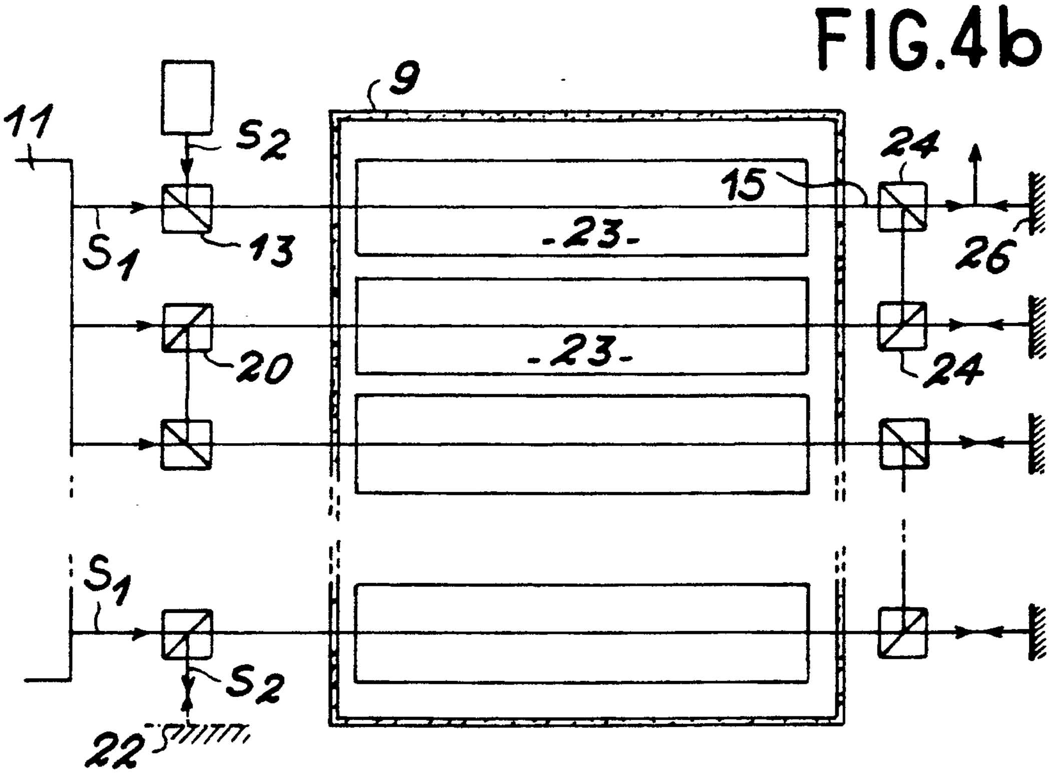
9
11
S2
24
15
S1
-23-
13
26
-23-
20
24
S1
S2
22

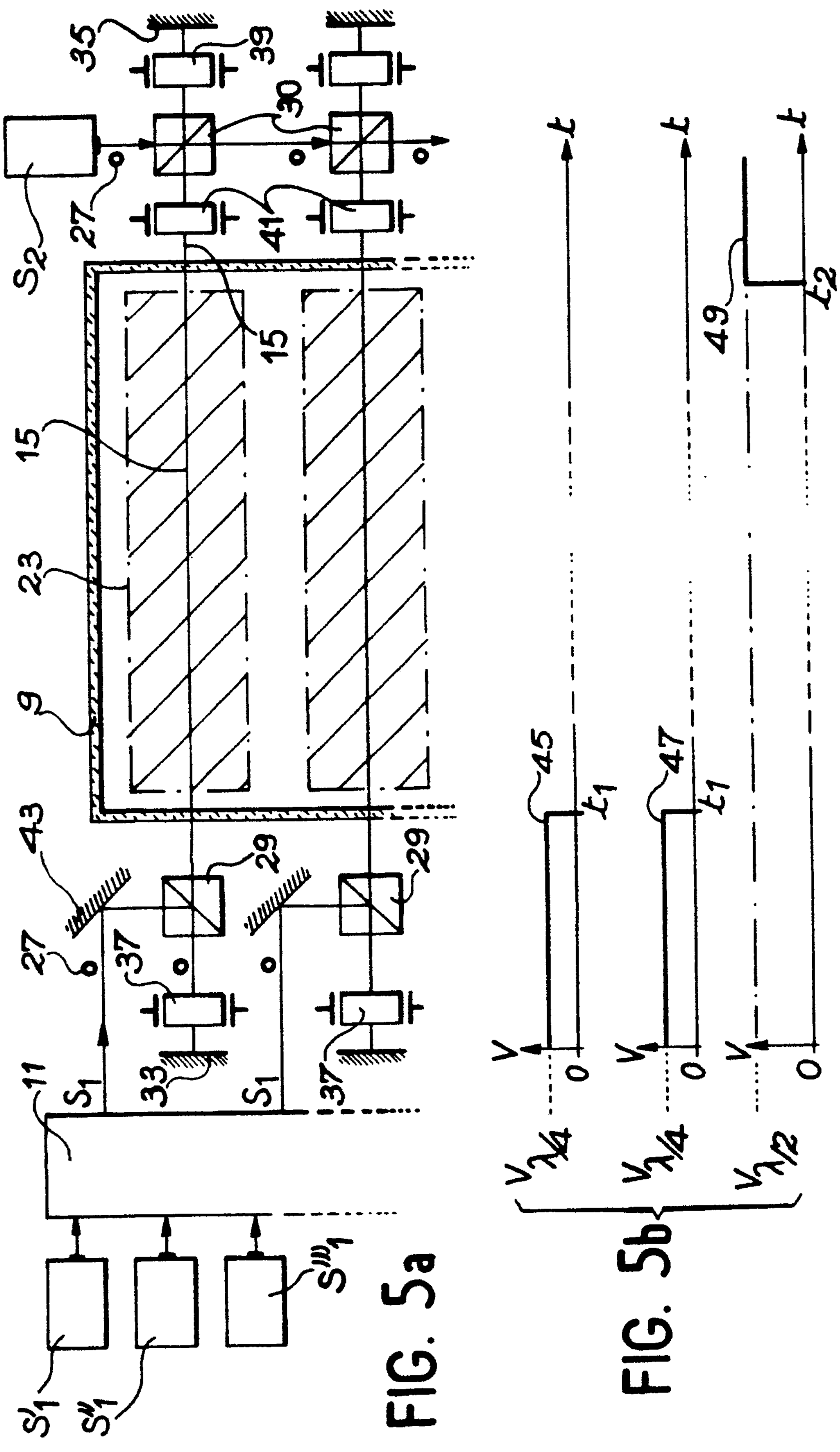


FIG. 5a

FIG. 5b

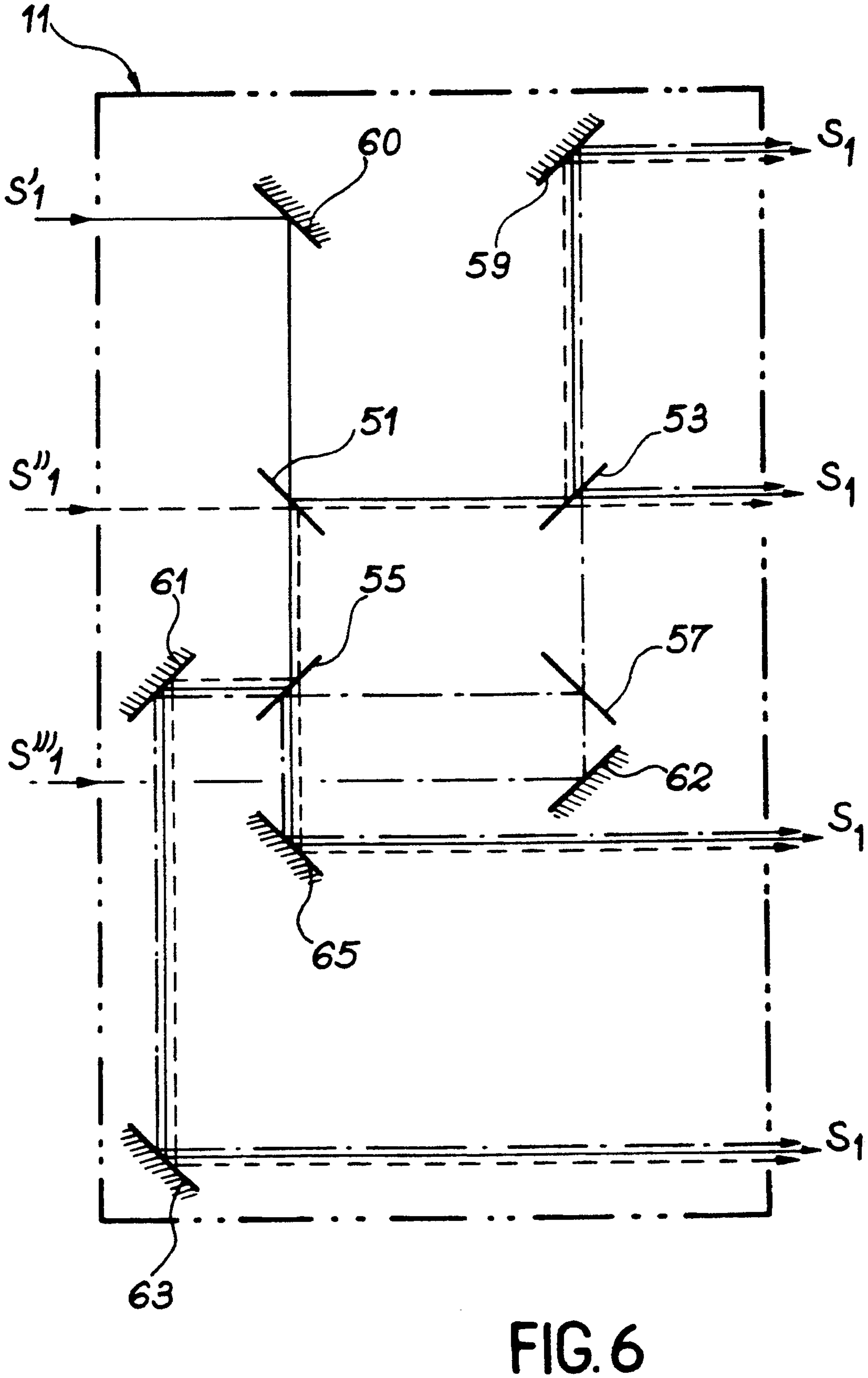


FIG. 6